# EUROPEAN PATENT SPECIFICATION

(11) **EP 2 274 933 B1**
(45) Date of publication and mention of the grant of the patent: **19.08.2020**
(21) Application number: 08753946.6
(22) Date of filing: 09.05.2008
(51) Int. Cl.: H04W 76/27

(54) **METHOD AND APPARATUSES FOR SEAMLESS HANDOVER BETWEEN 3GPP AND NON- 3GPP NETWORKS**
VERFAHREN UND VORRICHTUNGEN FÜR SEAMLESS HANDOVER ZWISCHEN 3GPP- UND NICHT-3GPP-NETZEN
MÉTHODE ET APPAREILS POUR LA TRANSFERT SANS COUPURE ENTRE RÉSEAUX 3GPP ET NON-3GPP

(43) Date of publication of application: 19.01.2011
(60) Divisional application: 20185120.1
(73) Proprietor: Telefonaktiebolaget LM Ericsson (publ), 164 83 Stockholm (SE)
(72) Inventor: RÖNNEKE, Hans, S-434 34 Kungsbacka (SE); RYDNELL, Gunnar, 411 32 Göteborg (SE); SANDER, Ann-Christine, 446 92 Skepplanda (SE); WALKER, John, Michael, 2288 The Hague (NL)
(74) Representative: Ericsson
(86) International application number: PCT/SE2008/000326
(87) International publication number: WO 2009/136820

(56) References cited:
- EP-A1- 1 841 142
- MOTOROLA: "Updating Interface names", 3GPP DRAFT; S2-083551_23402CR0164_INTERFACENAMES_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265758, [retrieved on 2008-05-02]
- "3rd Generation Partnership Project; Technical Specification Group Services and System Aspects; Architecture enhancements for non-3GPP accesses (Release 8)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.1, 1 March 2008 (2008-03-01), pages 1-163, XP050363656,
- QUALCOMM EUROPE: "Resolving FFS from EMM states", 18 November 2007 (2007-11-18), 3GPP DRAFT; 04 S2-074911_EMM STATES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050261522, [retrieved on 2007-11-18] * paragraphs [002.], [4.6.1] *
- "3rd Generation Partnership Project; Technical Specification Group Services and System Aspects; General Packet Radio Service (GPRS) enhancements for Evolved Universal Terrestrial Radio Access Network (E-UTRAN) access (Release 8)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 March 2008 (2008-03-01), pages 1-171, XP050363623,
- JASEEMUDDIN M. AN ARCHITECTURE FOR INTEGRATING UMTS AND 802.11 WLAN NETWORKS, [Online] 2003, XP010646102 Retrieved from the Internet: <URL:http://ieeexplore.ieee.org/stamp/stamp .jsp?arnumber=01214202> [retrieved on 2009-02-02]
- '3rd Generation Partnership Project, Technical Specification Group Services and System Aspects, General Packet Radio Service (GPRS) enhancements for Evolved Universal Terrestrial Radio Access Network (E-UTRAN) access (Release 8)' 3GPP TS 23.401 V8.0.0, [Online] December 2007, XP050282132 Retrieved from the Internet: <URL:www.quintillion.co.jp/3GPP/Specs/23401 -800.pdf> [retrieved on 2009-02-02]
- 'Technical Specification Group Services and System Aspects, Architecture enhancements for non-3GPP accesses (Release 8)' 3GPP TS 23.402 V8.0.0, [Online] December 2007, XP050282133 Retrieved from the Internet: <URL:www.quintillion.co.jp/3GPP/Specs/23402 -800.pdf> [retrieved on 2009-02-02]

## Description

### TECHNICAL FIELD

The present invention relates to a solution for providing seamless handover in wireless communication networks, and in particular to a solution for handover between two different types of communication networks.

### BACKGROUND OF THE INVENTION

EPS (Enhanced Packet System) is currently being specified by 3GPP. EPS is a new enhanced packet system (also known as SAE/LTE - Systems Architecture Evolution/ Long Term Evolution).

Evolved packet services are provided to mobile users in the evolved packet core (EPC). The access technologies available for a UE (User Equipment) to get service from the network, voice service operator, specific services (e.g. IMS - IP Multimedia Subsystem) or general internet access are 2G/3G or LTE in the 3GPP technologies, but there are also "non-3GPP" technologies such as WiMAX, CDMA2000, IEEE WLAN (Wireless Local Area Network) etc. When a UE roams it may change access technology depending on the best available connectivity, and when doing so it is desirable that the handover between technologies is seamless, such that the UE will keep its connection to services and in particular its IP address.

Such as the EPS is designed currently in TS 23.401 and TS 23.402, the architecture allows for the UE to get access and stay connected via a UP GW (User Plane Gateway), i.e. the PDN-GW. When the UE attaches to the 3GPP LTE system it connects to a control node, the MME, which assigns the UE to a PDN-GW for User Plane access. The PDN-GW assigns an IP address to the UE. When the UE roams between 3GPP access (LTE) and non-3GPP access (e.g. WiMAX) it shall remain using the same PDN-GW for the entire lifetime of the connection, and thus using the same IP address.

However, such as the system is designed today the UE looses contact with the control node MME, when it roams over from 3GPP (LTE) access to non-3GPP access (e.g. WiMax). The UE is not able to send periodic updates to the MME. When the MME does not receive periodic updates for IDLE UEs it will time out and implicitly detach the UE. When the UE roams back from non-3GPP access to 3GPP access it needs to attach again, with the consequence that it may be connected to a different PDN-GW and it may receive a new IP address. There is thus no seamless handover between the two communication types.

This same problem also appears in the non-3GPP access network side, such as when a UE is making use of an I-WLAN or a Wimax access network or even a CDMA2000 access. In current non-3GPP access networks the UE is requested to periodically re-authenticate; this procedure is triggered by the AAA server or by the access network. As noted in ref. 5(TS 33.234), periodic re-authentication is also used as a heartbeat to track a user's activity (i.e. similar to the periodic updates sent by the UE to the MME above). If the UE roams from a non-3GPP access network to a 3GPP access network (LTE) then the next AAA or access-network triggered periodic re-authentication will fail. In this case, both the AAA server and the HSS will de-register the user, which is equivalent to detaching the UE in the MME in the 3GPP case explained above. When the UE roams back from a 3GPP access (e.g. LTE) to non-3GPP access (e.g. Wimax, I-WLAN, cdma 2K) it needs to attach again, with the consequence that it may be connected to a different PDN-GW and it may receive a new IP address. There is no seamless handover in this case either. In other words, the same problem as described above for the 3GPP access also occurs in the non-3GPP accesses.

Hence, when a user roams between different network-access technologies, there is no solution to avoid that the control-plane entity in the source access network detaches or de-registers the user once it stops receiving periodic updates or heartbeat signals from the user equipment. This event will lead to seamless handover not being possible (and other error conditions might also appear from the fact that a source network de-registers a UE when it has simply roamed into another access).

The 3GPP TSG-SA2 Change Request CR0164 "Updating Interface names" suggests updated interface names throughout the 3GPP standard specification TS 23.402.

### SUMMARY OF THE INVENTION

It is the objective of the present invention to remedy at least some of these problems. This is provided in a number of aspects in which a first is a subscription server handling establishment and maintenance of wireless communication sessions, comprising:
a processing unit;
a memory unit;
at least one communication interface;
wherein the processing unit is arranged to operate instructions stored in the memory unit for tranceiving information control messages, relating to connection status of a UE in relation to at least two different connection types, through the at least one communication interface, control messages for:
   receiving a request for information of IP address from a mobility management device of a first communication type network;
   sending a response to the mobility management device with the IP address;
   sending information about connection status of the UE to a mobility management device in a second communication type network.

The information about connection status may be sent to the mobility management device of the second communication type network comprise an indication of the UE being in an idle mode in the second communication type network.

The at least two different connection types may be chosen with at least one from 3GPP and one from non-3GPP connection types.

The subscription server may further be arranged to receive a query request relating to connection status of the UE from the mobility management device.

A second aspect of the present invention is provided, a mobility management device arranged in an infrastructure of a wireless communication access network of a first type, comprising:
a processing unit;
a memory unit;
at least one communication interface;
wherein the processing unit is arranged to operate instructions stored in the memory unit for tranceiving information control messages relating to connection status of a UE through the at least one communication interface, control messages for:
   sending a request for information of IP address, to a subscription server;
   receiving a response from the subscription server with the IP address;
   updating a database with status information of the UE in the mobility management device.

The processor may further be arranged to operate a periodic update timer. The processor may further be arranged to send a query request relating to connection status of the UE to a subscription server if the periodic update timer has expired.

A third aspect of the present invention, a method for handling handover of a user equipment connection in a wireless communication network between two different wireless connection types is provided, comprising the steps of:
receiving a connection request from a UE in a mobility management device in a first wireless communication network;
sending from the mobility management device a request message for information about IP address to a subscription server;
sending a message indicating the status of the UE to a mobility management device of a second wireless communication network with a wireless communication type different from the first network;
updating a state database with information about the status of the UE in the second mobility management device.

The two wireless connection types may be 3GPP based and non-3GPP based.

The database may be updated with an idle mode status of the UE.

The method may further comprise a step of operating a connection timer. The second mobility management device may be arranged to send a query request relating to connection status of the UE to the subscription server in relation to connection timer status.

A fourth aspect of the present invention, a system is provided for handling handover in a mixed wireless communication network, comprising:
a subscription server;
at least one mobility management device in each communication network together forming the mixed communication network;
an infrastructure network for handling control traffic and mediating data;
wherein the subscription server and mobility management devices are in communication with each other over the infrastructure network and wherein a mobility management device in a second communication type network is arranged to receive information from the subscription server about IP address of a UE transferring to the second communication type network from a first communication type network and wherein the subscription server is arranged to transmit a control message to the mobility management device of the first communication access network indicating that the UE is in idle mode in relation to the first communication network.

The mixed communication network may comprise one of a 3GPP and a non-3GPP network or two non-3GPP networks.

A fifth aspect of the present invention, a communication interface is provided between a mobility management device and a subscription server, wherein information exchange relating to connection status of a UE doing hand over between a 3GPP access network and a non-3GPP access network is transferred on the communication interface.

The present invention thus provides an advantage of providing enhanced seamless service when a UE roams between 3GPP and non-3GPP access or roams between two non-3GPP access networks.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a network according to the present invention;
Fig. 2 illustrates schematically a device according to the present invention;
Fig. 3 illustrates schematically a state diagram to one embodiment according of the present invention;
Fig. 4 illustrates schematically a state diagram according to another embodiment according of the present invention; and
Fig. 5 illustrates schematically in a block diagram a method in one embodiment according to the present invention.

### DETAILED DESCRIPTION OF PREFERRED EMBODIMENTS

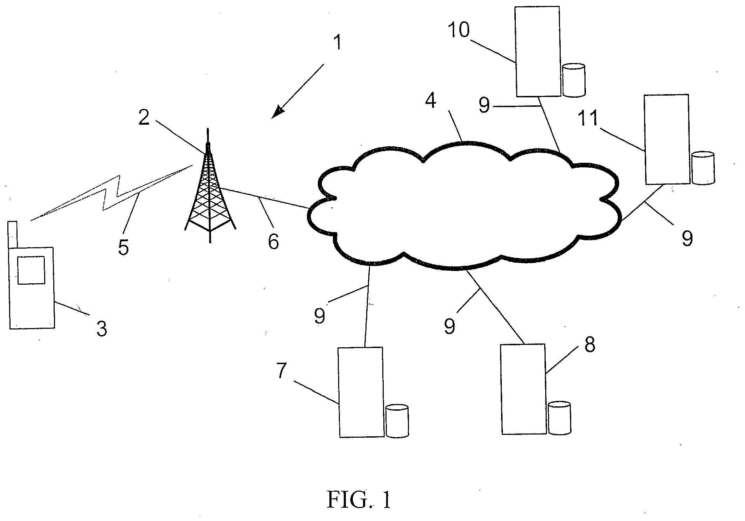

In Fig. 1 reference numeral 1 generally indicate a network according to the present invention. The network comprise a base station (BS) or some other network access gateway (GW) 2 which mobile station (UE) 3 may communicate with using suitable wireless interface 5. The BS/GW is connected in any suitable way 6 to a communication infrastructure network 4 which in turn may be connected to a public network (not shown), e.g. the Internet. In the infrastructure network one or several mobility and/or connection management devices 7, 8 may be attached in order to provide mobility and/or connection management of the UE. These mobility/connection management devices 7, 8 may be connected to the infrastructure network using any suitable connection type 9 or may also be incorporated into the infrastructure network itself. Furthermore, one or several subscription services 10, 11 may be connected 9 to the infrastructure network 4 (connected directly or in-directly to the infrastructure network 4).

A mobility management device 7, 8 may comprise for instance a mobility management entity (MME) or an SGSN.

It should be noted that with the term base station is meant an entity acting as a gateway to an access network with a wireless connection to UE's and other devices in connection with the access network and further connected to a communication network. With the term UE is meant an entity not part of an infrastructure network but that communicate with the infrastructure network (e.g. a mobile phone, a PDA, a laptop, a network connected sensor device, and so on).

The wireless communication between the UE and BS may be any suitable type using packet based communication, e.g. WLAN, WiMax, WiFi, CDMA2000, GPRS, 2G/3G, and so on as understood by the skilled person. The BS may provide several different types of communication interfaces, for instance both GPRS and WLAN at the same time and the UE may choose between these two types depending on different parameters (bandwidth, Link quality, range, QoS, monetary, operator, and so on). Alternatively, the UE may perform a handover between different communication types located on different BS and/or due to moving from one BS cell to another.

Depending on type of connection between the BS and the UE initially different mobility management and/or connection management devices may be in operation. In case the UE has a relation to a network operator, a home subscriber system (HSS) keeps track of the UE.

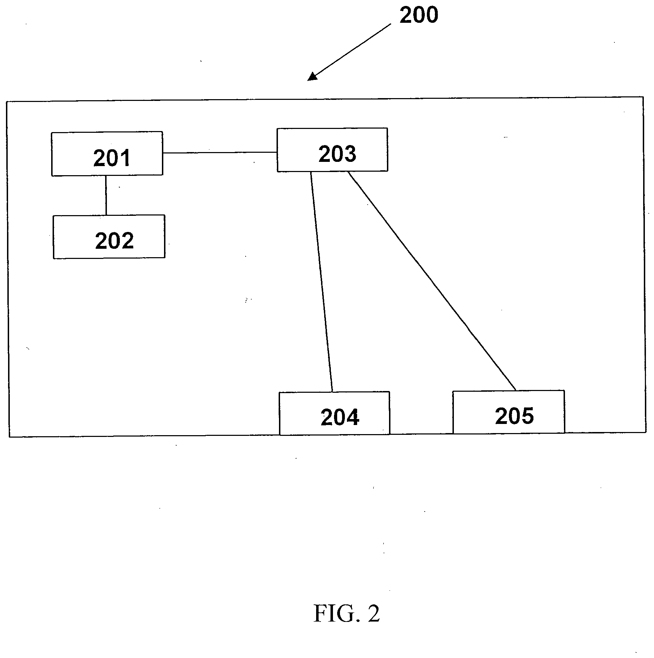

The present invention may be implemented in an infrastructure device 200 as shown in Fig. 2. The infrastructure device 200 may comprise a processing unit 201, at least one memory unit 202, and at least one communication control unit 203 handling communication using at least one communication interface 204, 205. The device 200 is arranged to communicate with the infrastructure network 4 and entities connected to the network 4 as well as entities connected to a public network in turn connected to the infrastructure network 4. It should be understood by the skilled person that other units may be present in the device depending on configuration and tasks performed by the device: however, these are not shown since they are of no importance for the present invention.

When a UE attaches to a 3GPP network a Mobility Management entity (MME) or SGSN will be involved to keep track of the UE. Other entities or devices may be in operation during the attachment and connection of the UE to the infrastructure network; however, these are not shown or discussed as these are out of the scope of the present invention.

Below examples of embodiments of the present invention will be discussed and for this it is assumed that the UE has attached to a 3GPP or non-3GPP network and has established a connection using known procedures.

According to the current architecture and specification in TS 23.401 and 23.402, the UE will autonomously make a handover from 3GPP access to non-3GPP access. The UE will attach in the non-3GPP side. At that point it will get in contact with the network and in particular there will be a signaling to an AAA server in order to obtain the PDN-GW address where the UE is already connected in the user plane (UP). The AAA server has knowledge of or can get the PDN-GW address from the HSS. It is advantageously for seamless handover as seen above that the PDN-GW does not change.

The AAA server will become aware that the UE is connected via non-3GPP access and can indicate to the HSS that the UE is now connected to non-3GPP access.
At this point, the MME or SGSN is not aware that the UE has left from 3GPP access to non-3GPP access. The MME or SGSN needs also to be aware of this. Since the information is available in the AAA server and/or in the HSS, the MME may be informed about the non-3GPP attachment of the UE. The MM state in the MME and/or SGSN is then modified such that instead of staying in IDLE state, the UE is classified as in state IDLE_non_3GPP_access, such that special handling of the UE may be done in this state and so that the UE is prevented from being detached.

The same solution is applied in the case a UE roams from a non-3GPP access (e.g. WiMax, I-WLAN) to a 3GPP access (e.g. LTE or 2G/3G). In this case, when the UE changes to a 3GPP access, the MME and/or the SGSN are contacted and become aware that the UE is attached and can obtain the PDN-GW address from the HSS. However, the AAA server is not aware that the UE has left from non-3GPP access to 3GPP access. The AAA server needs also to be aware of this. Since the information is available in the MME/SGSN server and/or in the HSS, the AAA server may be informed about the 3GPP attachment of the UE. The registration status in AAA server is then modified such that instead of going into state of user De-registered, the UE is classified as in state IDLE_3GPP access, such that special handling of the UE is done in this state and so that the UE is prevented from being detached.

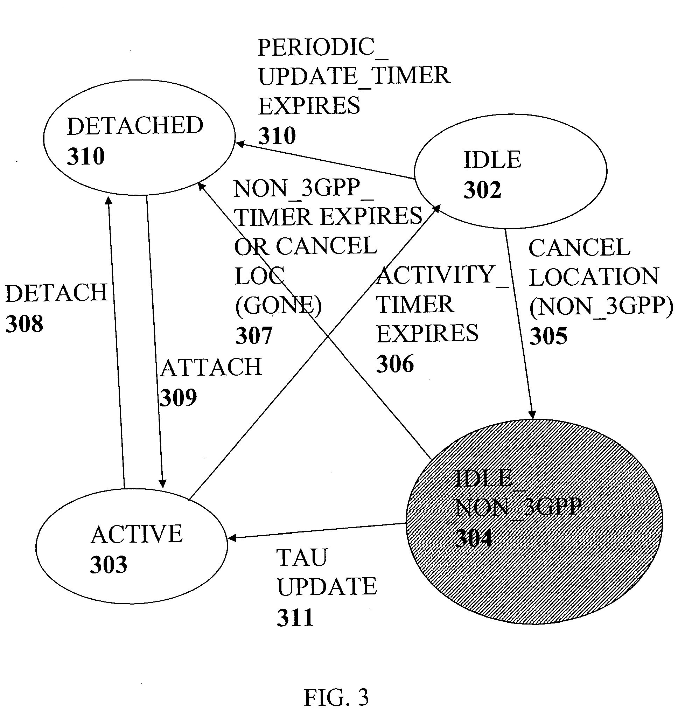

There is according to the present invention a new MM state the IDLE_non_3GPPas shown in Fig. 3. Fig. 3 shows different states of the UE in a 3GPP infrastructure. There are four different states for the UE: 301 Detached from the network, 302 IDLE in the network, 303 Active in the network, and 304 IDLE_non_3GPP. Changing state to/from Active/Detached may be performed using attach/detach control procedures, 309/308, changing from Active to IDLE state may be performed if an activity timer expires 306. In the same manner changing state from IDLE to Detached may be performed if an activity timer expires 310 (periodic update timer). Change from an IDLE state to the IDLE_non_3GPP state may be triggered from a Cancel location (non_3GPP) procedure 305. From the IDLE_non_3GPP state the UE may go to a Detached state if a timer expires (Non_3GPP_timer) or a command indicating that the UE has left permanently (for instance a Cancel Location (gone) control procedure) 307. From the IDLE_non_3gpp state the UE may change to an Active state using for instance a TAU update 311. These state changes will now be discussed in more detail.

The new state IDLE_non_3GPP can be exited through Non_3GPP_Timer Expires or a Cancel Location (gone) in which case the UE is detached. Or the UE returns to 3GPP access and sends a message to the MME, e.g. a TAU Update, in which case the UE enters Active in 3GPP MME.

In the state IDLE_non_3GPP special handling of the UE is taken, such that e.g. when the ordinary periodic update timer expires the MME can take actions for alternative handling of the UE, e.g.:
1. the periodic_update_timer can be restarted (a limited number of times)
2. the length of the periodic_update_timer can be pro-longued
3. the MME can request from the HSS/AAA information if the UE is still known to be in non-3GPP access

In the state IDLE_non_3GPP the MME can have another timer (non_3GPP_Timer) that may expire, typically a longer time. Or the MME may get a Cancel Location (gone) from the HSS or AAA server that the UE has detached from non-3GPP access.

The UE can enter new state IDLE_non_3GPP in the MME when the MME gets updated that the UE is entering non-3GPP access. There can be different methods to get the MME updated of that the UE is entering non-3GPP access, e.g.:
1. when the AAA gets to know that the UE has attached to non-3GPP it may update the UE state in the HSS indicating non-3GPP access. The HSS may send a message, e.g. Cancel Location with a new cause code "UE in non-3GPP access" to the MME. (Existing interfaces in the TS 23.401 and TS 23.402, Wx* and S6a may be used. A new SAE message for Cancel Location and/or a new cause code may be designed)
2. when the AAA gets to know that the UE has attached to non-3GPP it may update the UE state in the MME. The AAA may get the MME address from the HSS. (Existing interfaces in the TS 23.401 and TS 23.402, Wx* is used. In addition a new interface between MME and AAA server is needed.)
3. when the periodic_update_timer expires in the MME , the MME can poll the HSS for information about the access state of the UE. If the HSS is updated by the AAA server, the HSS will respond to the MME that the UE is in non-3GPP access. (Existing interfaces in the TS 23.401 and TS 23.402, Wx* and S6a are used. A new SAE message for Polling the HSS from the MME is designed.)
4. when the periodic_update_timer expires in the MME , the MME can poll the AAA server for information about the access state of the UE. (A new interface between MME and AAA server is needed which is not there in the SAE architecture today)

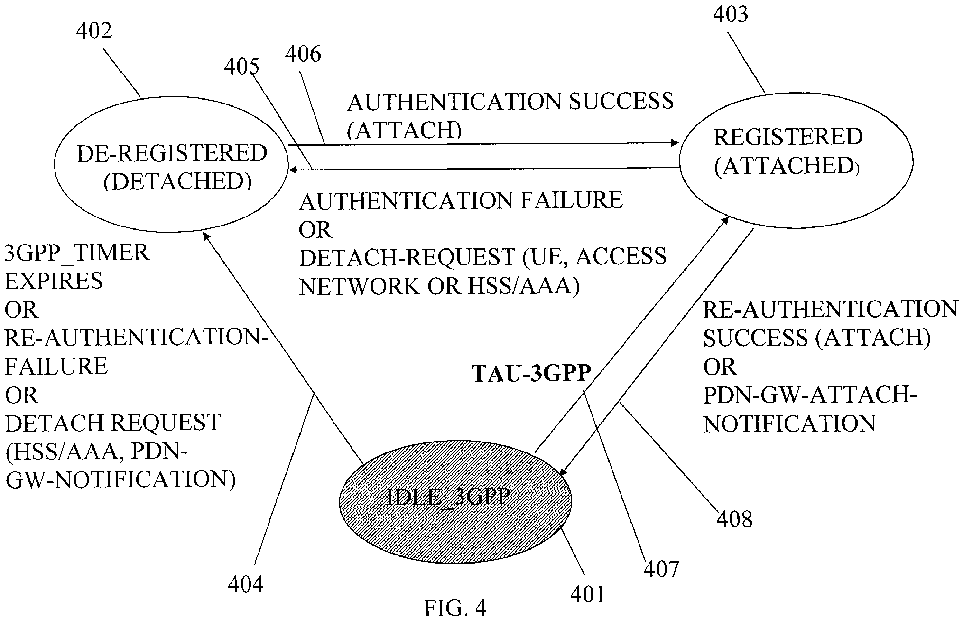

For the non-3GPP access, the AAA server is updated to handle the following registration states as seen in Fig. 4: UE Registration states in AAA and HSS. There are mainly three states (of concern for the present invention): Registered (attached) 403, De-registered (detached) 402, and IDLE-3GPP 401. The different routes to changing state are: 404 from IDLE_3GPP to De-registered through at least one of 3GPP_timer expired, Re_authentication failure, or Detach request (HSS/AAA, PDN-GW notification). The UE may change state from Registered to IDLE_3GPP through a TAU_3GPP control procedure 407 and from IDLE_3GPP to Registered through at least one of Re-authentication success (attach) or PDN_GW attach notification 408. In the same manner the state may be switched from De-registered to Registered through an Authentication success control procedure 406 and switched from Registered to De-registered through at least one of Authentication failure or Detach request (UE, access network or HSS/AAA) control procedures 405. These will now be discussed in more detail.

A new non-3GPP UE registration state is added for a user in the AAA server (and also in the HSS since the HSS has the same information): IDLE_3GPP.

The UE enters the new state IDLE_3GPP in the AAA when the AAA gets updated that the UE is entering 3GPP access, basically when the UE performs a Tracking Area Update (TAU) procedure (against an MME) or a Routing Area Update procedure (against an SGSN).

Both scenarios are included in the stimulus TAU-3GPP which causes the UE's state in the AAA to change from Attached/Registered to IDLE_3GPP. There may be different methods to get the AAA updated with the information that the UE has successfully changed to a 3GPP access, e.g.:
1. The HSS notifies the AAA server that the UE has performed a successful hand-over to 3GPP access without having detached from non-3GPP.
2. The MME directly notifies the AAA server that the UE has performed a successful hand-over to 3GPP access without having detached from non-3GPP.
3. The PDN-GW notifies the AAA server that the UE has performed a successful hand-over to 3GPP access without having detached from non-3GPP.

In all cases, as a result, the AAA server should not detach the UE, not try to re-authenticate the UE and finally set the UE's state to IDLE_3GPP. The AAA server may also need to modify its re-authentication timers as well as those previously set in the non-3GPP access network in order to avoid unsuccessful re-authentications.

The UE registration state in the AAA server may change from IDLE_3GPP to:
1. De-registered/detached. This may occur because the 3GPP_Timer expires, or the re-authentication was unsuccessful in the non-3GPP access, or because the HSS requests the AAA to detach the UE, or because the PDN-GW notifies the AAA that the UE has detached in 3GPP access and there is no UE activity in the non-3GPP access.
2. Registered/Attached. This occurs when the UE successfully authenticates or re-authenticates in a non-3GPP access or when the PDN-GW notifies the AAA that the UE has initiated activity in the non-3GPP access.

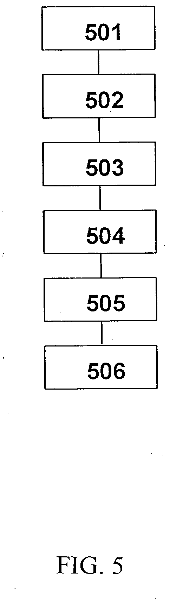

A method according to the present invention may be illustrated as in Fig. 5, wherein:
501. A UE moves from one connection type network (3GPP or non-3GPP) to another through an attachment/activation procedure;
502. The UE signals to a mobility entity to receive a PDN-GW address;
503. The mobility entity checks the status of the UE at a home subscription server (HSS) and receives the PDN-GW address;
504. Updating the state information of the UE in the mobility entity;
505. The mobility entity or the HSS transmits a message with information of the current state of the UE to the mobility entity of the old connection type network.
506. The mobility entity of the old network updates state information of the UE internally.

It should be noted that even though the present invention has been exemplified using a transfer from 3GPP to a non-3GPP access, it is also applicable to other variations of transfer from one network to another, e.g. from one non-3GPP to another non-3GPP network or from a non-3GPP network to a 3GPP network. Therefore the term connection type network may also comprise different logical types as well as different communication standards, e.g. transfer between WLAN of different operators, 3GPP to non-3GPP network transfer, transfer between WiFi and WiMAX networks of same or different operators.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, and that several "means", "devices", and "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### References

1. 3GPP TS 23.401
2. 3GPP TS 23.402
3. 3GPP TS 23.060
4. 3GPP TS 23.234
5. 3GPP TS 33.234

### ABBREVIATIONS

- AAA: Access, Authorization, and Accounting
- BS: Base station
- EPC: Evolved Packet Core
- EPS: Enhanced Packet System
- GGSN: Gateway GPRS Support Node
- GW: Gateway
- HO: Hand-over or Handoff
- HSS: Home Subscriber Server
- IP: Internet Protocol
- I-WLAN: Interworking WLAN
- LTE: Long Term Evolution
- MM: Mobility management
- MME: Mobility Management Entity
- PDN-GW: Packet Data Network-Gateway
- RNC: Radio Network Controller
- SAE: System Architecture Evolution
- SGSN: Serving GPRS Support Node
- TAU: Tracking-Area Update
- UE: User Equipment
- UP: User Plane
- WLAN: Wireless Local Area Network

## Claims

1. A subscription server (10, 11) for handling establishment and maintenance of wireless communication sessions, and for handling handover of a user equipment, UE, (3) between a first and a second wireless communication network, comprising:
- a processing unit (201);
- a memory unit (202);
- at least one communication interface (204, 205);
wherein the processing unit (201) is arranged to operate instructions stored in the memory unit (202) for tranceiving information control messages, the control messages relating to connection status of the UE (3) in relation to the first and the second wireless communication network, wherein at least one wireless communication network is a 3GPP type and at least one is a non-3GPP type, through the at least one communication interface (204, 205), wherein the subscription server (10, 11) is configured to:
- receiving a request for information of IP address from a first mobility management device (7, 8) of the first wireless communication network;
- sending a response to the first mobility management device (7, 8) of the first wireless communication network with the IP address;
- sending information about connection status of the UE to a second mobility management device (7, 8) in the second wireless communication network, wherein the connection status comprises that a Mobility Management, MM, state in the MME and/or SGSN is modified such that the UE is classified as in state IDLE_non_3GPP_access, or the registration status in AAA server is modified such that the UE is classified as in state IDLE_3GPP access, enabling that the UE (3) is prevented from being detached.

2. The subscription server (10, 11) according to claim 1, wherein the information about connection status sent to the second mobility management device (7, 8) of the second wireless communication network comprise an indication of the UE (3) being in an idle mode in the second wireless communication network.

3. The subscription server (10, 11) according to claim 1, further arranged to receive a query request relating to connection status of the UE (3) from the second mobility management device (7, 8).

4. A first mobility management device (7, 8) arranged in an infrastructure of a first wireless communication network, comprising:
- a processing unit (201);
- a memory unit (202);
- at least one communication interface (204, 205);
wherein the processing unit (202) is arranged to operate instructions stored in the memory unit (202) for tranceiving information control messages relating to connection status of a User Equipment, UE (3) in relation to the first and a second wireless communication network, wherein at least one wireless communication network is a 3GPP type and at least one is a non-3GPP type, through the at least one communication interface (204, 205),
wherein the first mobility management device (7,8) is configured to
- sending a request for information of IP address, to a subscription server (10, 11) configured for handling establishment and maintenance of wireless communication sessions, and for handling handover of the UE (3) between the first and the second wireless communication network;
- receiving a response from the subscription server (10, 11) with the IP address;
- sending information about connection status of the UE (3) to a second mobility management device (7, 8) in the second wireless communication network, wherein the connection status comprises that a Mobility Management, MM, state in the MME and/or SGSN is modified such that the UE is classified as in state IDLE_non_3GPP_access, or the registration status in AAA server is modified such that the UE is classified as in state IDLE_3GPP access, enabling that the UE is prevented from being detached.

5. The mobility management device according to claim 4, wherein the processing unit (201) is further arranged to operate a periodic update timer.

6. The mobility management device according to claim 4, wherein the processing unit (201) is further arranged to send a query request relating to connection status of the UE (3) to a subscription server (10, 11) if the periodic update timer has expired.

7. A method for handling handover of a user equipment, UE, (3) between a first and a second wireless communication network, wherein at least one wireless communication network is a 3GPP type and at least one is a non-3GPP type, comprising the steps of:
- receiving a connection request from a UE (3) by a first mobility management device in the first wireless communication network;
- sending from the first mobility management device in the first communication network a request message for information about IP address to a subscription server;
- sending from a subscription server (10, 11) or the first mobility management device (7, 8) a message indicating the status of the UE (3) to a second mobility management device in the second wireless communication network,
- updating a state database with the status of the UE in the second mobility management device, wherein such state database update comprises that a Mobility Management, MM, state in the MME and/or SGSN is modified such that the UE is classified as in state IDLE_non_3GPP_access, or the registration status in AAA server is modified such that the UE is classified as in state IDLE_3GPP access, which enables that the UE (3) is prevented from being detached from the second wireless communication network.

8. The method according to claim 7, wherein database is updated with an idle mode status of the UE (3).

9. The method according to claim 7, further comprising a step of operating a connection timer.

10. The method according to claim 9, wherein the second mobility management device (7, 8) is arranged to send a query request relating to connection status of the UE (3) to the subscription server (10, 11) in relation to connection timer status.

## Patentansprüche

1. Abonnement-Server (10, 11) zum Handhaben des Aufbaus und der Aufrechterhaltung von drahtlosen Kommunikationssitzungen und zum Handhaben der Übergabe einer Benutzereinrichtung, UE, (3) zwischen einem ersten und einem zweiten drahtlosen Kommunikationsnetz, umfassend:
- eine Verarbeitungseinheit (201);
- eine Speichereinheit (202);
- mindestens eine Kommunikationsschnittstelle (204, 205);
wobei die Verarbeitungseinheit (201) eingerichtet ist, um in der Speichereinheit (202) gespeicherte Befehle zum Senden/Empfangen von Informationssteuernachrichten zu betreiben, wobei sich die Steuernachrichten auf den Verbindungsstatus der UE (3) in Bezug auf das erste und das zweite drahtlose Kommunikationsnetz beziehen, wobei mindestens ein drahtloses Kommunikationsnetz ein 3GPP-Typ ist und mindestens eines ein Nicht-3GPP-Typ ist, über die mindestens eine Kommunikationsschnittstelle (204, 205), wobei der Abonnement-Server (10, 11) konfiguriert ist zum:
- Empfangen einer Informationsanforderung der IP-Adresse von einer ersten Mobilitätsmanagement-Vorrichtung (7, 8) des ersten drahtlosen Kommunikationsnetzes;
- Senden einer Antwort an die erste Mobilitätsmanagement-Vorrichtung (7, 8) des ersten drahtlosen Kommunikationsnetzes mit der IP-Adresse;
- Senden von Informationen über den Verbindungsstatus der UE an eine zweite Mobilitätsmanagement-Vorrichtung (7, 8) in dem zweiten drahtlosen Kommunikationsnetz, wobei der Verbindungsstatus umfasst, dass ein Mobilitätsmanagement-Zustand, MM-Zustand, im MME und/oder SGSN so geändert wird, dass die UE als im Zustand IDLE_non_3GPP_access klassifiziert wird, oder der Registrierungsstatus im AAA-Server so geändert wird, dass die UE als im Zustand IDLE_3GPP _access klassifiziert wird, wodurch verhindert wird, dass die UE (3) abgetrennt wird.

2. Abonnement-Server (10, 11) nach Anspruch 1, wobei die an die zweite Mobilitätsmanagement-Vorrichtung (7, 8) des zweiten drahtlosen Kommunikationsnetzes gesendeten Informationen über den Verbindungsstatus eine Angabe darüber umfassen, dass sich die UE (3) im zweiten drahtlosen Kommunikationsnetz in einem Ruhemodus befindet.

3. Abonnement-Server (10, 11) nach Anspruch 1, der ferner eingerichtet ist, um von der zweiten Mobilitätsmanagement-Vorrichtung (7, 8) eine Anfrage bezüglich des Verbindungsstatus der UE (3) zu empfangen.

4. Erste Mobilitätsmanagement-Vorrichtung (7, 8), die in einer Infrastruktur eines ersten drahtlosen Kommunikationsnetzes eingerichtet ist, umfassend:
- eine Verarbeitungseinheit (201);
- eine Speichereinheit (202);
- mindestens eine Kommunikationsschnittstelle (204, 205);
wobei die Verarbeitungseinheit (202) eingerichtet ist, um in der Speichereinheit (202) gespeicherte Befehle zum Senden/Empfangen von Informationssteuernachrichten in Bezug auf den Verbindungsstatus einer Benutzereinrichtung, UE (3) hinsichtlich des ersten und eines zweiten drahtlosen Kommunikationsnetzes zu betreiben, wobei mindestens ein drahtloses Kommunikationsnetz ein 3GPP-Typ ist und mindestens eines ein Nicht-3GPP-Typ ist, über die mindestens eine Kommunikationsschnittstelle (204, 205), wobei die erste Mobilitätsmanagement-Vorrichtung (7, 8) konfiguriert ist zum
- Senden einer Informationsanfrage zur IP-Adresse an einen Abonnement-Server (10, 11), der zum Handhaben des Aufbaus und der Aufrechterhaltung von drahtlosen Kommunikationssitzungen und zum Handhaben der Übergabe der UE (3) zwischen dem ersten und dem zweiten drahtlosen Kommunikationsnetz konfiguriert ist;
- Empfangen einer Antwort vom Abonnement-Server (10, 11) mit der IP-Adresse;
- Senden von Informationen über den Verbindungsstatus der UE (3) an eine zweite Mobilitätsmanagement-Vorrichtung (7, 8) in dem zweiten drahtlosen Kommunikationsnetz, wobei der Verbindungsstatus umfasst, dass ein Mobilitätsmanagement-Zustand, MM-Zustand, im MME und/oder SGSN so geändert wird, dass die UE als im Zustand IDLE_non_3GPP_access klassifiziert wird, oder der Registrierungsstatus im AAA-Server so geändert wird, dass die UE als im Zustand IDLE_3GPP _access klassifiziert wird, wodurch verhindert wird, dass die UE abgetrennt wird.

5. Mobilitätsmanagement-Vorrichtung nach Anspruch 4, wobei die Verarbeitungseinheit (201) ferner eingerichtet ist, um einen periodischen Aktualisierungszeitgeber zu betreiben.

6. Mobilitätsmanagement-Vorrichtung nach Anspruch 4, wobei die Verarbeitungseinheit (201) ferner eingerichtet ist, um eine Anfrageanforderung in Bezug auf den Verbindungsstatus der UE (3) an einen Abonnement-Server (10, 11) zu senden, wenn der periodische Aktualisierungszeitgeber abgelaufen ist.

7. Verfahren zum Handhaben der Übergabe einer Benutzereinrichtung, UE, (3) zwischen einem ersten und einem zweiten drahtlosen Kommunikationsnetz, wobei mindestens ein drahtloses Kommunikationsnetz ein 3GPP-Typ ist und mindestens eines ein Nicht-3GPP-Typ ist, umfassend die Schritte:
- Empfangen einer Verbindungsanforderung von einer UE (3) durch eine erste Mobilitätsmanagement-Vorrichtung in dem ersten drahtlosen Kommunikationsnetz;
- Senden von der ersten Mobilitätsmanagement-Vorrichtung in dem ersten Kommunikationsnetz einer Anforderungsnachricht für Informationen über die IP-Adresse an einen Abonnement-Server;
- Senden von einem Abonnement-Server (10, 11) oder der ersten Mobilitätsmanagement-Vorrichtung (7, 8) einer Nachricht, die den Status der UE (3) angibt, an eine zweite Mobilitätsmanagement-Vorrichtung in dem zweiten drahtlosen Kommunikationsnetz,
- Aktualisieren einer Zustandsdatenbank mit dem Status der UE in der zweiten Mobilitätsmanagement-Vorrichtung, wobei eine solche Aktualisierung der Zustandsdatenbank umfasst, dass ein Mobilitätsmanagement-Zustand, MM-Zustand, im MME und/oder SGSN so geändert wird, dass die UE als im Zustand IDLE_non_3GPP _access klassifiziert wird, oder der Registrierungsstatus im AAA-Server so geändert wird, dass die UE als im Zustand IDLE_3GPP_access klassifiziert wird, wodurch verhindert werden kann, dass die UE (3) vom zweiten drahtlosen Kommunikationsnetz abgetrennt wird.

8. Verfahren nach Anspruch 7, wobei die Datenbank mit einem Ruhemodus-Status der UE (3) aktualisiert wird.

9. Verfahren nach Anspruch 7, ferner umfassend einen Schritt zum Betreiben eines Verbindungszeitgebers.

10. Verfahren nach Anspruch 9, wobei die zweite Mobilitätsmanagement-Vorrichtung (7, 8) eingerichtet ist, um eine Anfrageanforderung in Bezug auf den Verbindungsstatus der UE (3) an den Abonnement-Server (10, 11) hinsichtlich des Status des Verbindungszeitgebers zu senden.

## Revendications

1. Serveur d'abonnement (10, 11) pour prendre en charge l'établissement et le maintien de sessions de communication sans fil, et pour prendre en charge un transfert d'un équipement utilisateur, UE (3) entre un premier et un deuxième réseau de communication sans fil, comprenant :
- une unité de traitement (201) ;
- une unité de mémoire (202) ;
- au moins une interface de communication (204, 205) ;
dans lequel l'unité de traitement (201) est agencée pour exploiter des instructions stockées dans l'unité de mémoire (202) pour émettre-recevoir des messages de commande d'informations, les messages de commande se rapportant à un statut de connexion de l'UE (3) par rapport au premier et au deuxième réseau de communication sans fil, dans lequel au moins un réseau de communication sans fil est un type 3GPP et au moins un est un type non-3GPP, par l'intermédiaire de l'au moins une interface de communication (204, 205), dans lequel le serveur d'abonnement (10, 11) est configuré pour :
- recevoir une demande d'informations d'adresse IP depuis un premier dispositif de gestion de mobilité (7, 8) du premier réseau de communication sans fil ;
- envoyer une réponse au premier dispositif de gestion de mobilité (7, 8) du premier réseau de communication sans fil avec l'adresse IP ;
- envoyer des informations concernant un statut de connexion de l'UE à un deuxième dispositif de gestion de mobilité (7, 8) dans le deuxième réseau de communication sans fil, dans lequel le statut de connexion comprend le fait qu'un état de gestion de mobilité, MM, dans la MME et/ou le SGSN est modifié de sorte que l'UE est classé comme dans un état INACTIF_accès_non_3GPP, ou le statut d'enregistrement dans un serveur AAA est modifié de sorte que l'UE est classé comme dans l'état INACTIF_accès_3GPP, faisant en sorte que l'UE (3) soit empêchée d'être détachée.

2. Serveur d'abonnement (10, 11) selon la revendication 1, dans lequel les informations concernant le statut de connexion envoyées au deuxième dispositif de gestion de mobilité (7, 8) du deuxième réseau de communication sans fil comprennent une indication de l'UE (3) étant dans un mode inactif dans le deuxième réseau de communication sans fil.

3. Serveur d'abonnement (10, 11) selon la revendication 1, agencé en outre pour recevoir une requête se rapportant à un statut de connexion de l'UE (3) depuis le deuxième dispositif de gestion de mobilité (7, 8).

4. Premier dispositif de gestion de mobilité (7, 8) agencé dans une infrastructure d'un premier réseau de communication sans fil, comprenant :
- une unité de traitement (201) ;
- une unité de mémoire (202) ;
- au moins une interface de communication (204, 205) ;
dans lequel l'unité de traitement (202) est agencée pour exploiter des instructions stockées dans l'unité de mémoire (202) pour émettre-recevoir des messages de commande d'informations se rapportant à un statut de connexion d'un équipement utilisateur, UE (3) par rapport au premier et à un deuxième réseau de communication sans fil, dans lequel au moins un réseau de communication sans fil est un type 3GPP et au moins un est un type non-3GPP, par l'intermédiaire de l'au moins une interface de communication (204, 205),
dans lequel le premier dispositif de gestion de mobilité (7, 8) est configuré pour
- envoyer une demande d'informations d'adresse IP, à un serveur d'abonnement (10, 11) configuré pour prendre en charge l'établissement et le maintien de sessions de communication sans fil, et pour prendre en charge un transfert de l'UE (3) entre le premier et le deuxième réseau de communication sans fil ;
- recevoir une réponse du serveur d'abonnement (10, 11) avec l'adresse IP ;
- envoyer des informations concernant un statut de connexion de l'UE (3) à un deuxième dispositif de gestion de mobilité (7, 8) dans le deuxième réseau de communication sans fil, dans lequel le statut de connexion comprend le fait qu'un état de gestion de mobilité, MM, dans la MME et/ou le SGSN est modifié de sorte que l'UE est classé comme dans un état INACTIF_accès_non_3GPP, ou le statut d'enregistrement dans un serveur AAA est modifié de sorte que l'UE est classé comme dans l'état INACTIF_accès_3GPP, faisant en sorte que l'UE soit empêchée d'être détachée.

5. Dispositif de gestion de mobilité selon la revendication 4, dans lequel l'unité de traitement (201) est en outre agencée pour exploiter un temporisateur de mise à jour périodique.

6. Dispositif de gestion de mobilité selon la revendication 4, dans lequel l'unité de traitement (201) est en outre agencée pour envoyer une demande de requête se rapportant à un statut de connexion de l'UE (3) à un serveur d'abonnement (10, 11) si le temporisateur de mise à jour périodique a expiré.

7. Procédé pour prendre en charge un transfert d'un équipement utilisateur, UE (3) entre un premier et un deuxième réseau de communication sans fil, dans lequel au moins un réseau de communication sans fil est un type 3GPP et au moins un est un type non-3GPP, comprenant les étapes consistant à :
- recevoir une demande de connexion depuis un UE (3) par un premier dispositif de gestion de mobilité dans le premier réseau de communication sans fil ;
- envoyer depuis le premier dispositif de gestion de mobilité dans le premier réseau de communication un message de demande pour des informations concernant une adresse IP à un serveur d'abonnement ;
- envoyer depuis un serveur d'abonnement (10, 11) ou le premier dispositif de gestion de mobilité (7, 8) un message indiquant le statut de l'UE (3) à un deuxième dispositif de gestion de mobilité dans le deuxième réseau de communication sans fil,
- mettre à jour une base de données d'états avec le statut de l'UE dans le deuxième dispositif de gestion de mobilité, dans lequel une telle mise à jour de base de données d'états comprend le fait qu'un état de gestion de mobilité, MM, dans la MME et/ou le SGSN est modifié de sorte que l'UE est classé comme dans un état INACTIF_accès_non_3GPP, ou le statut d'enregistrement dans un serveur AAA est modifié de sorte que l'UE est classé comme dans l'état INACTIF_accès_3GPP, ce qui permet que l'UE (3) soit empêchée d'être détachée du deuxième réseau de communication sans fil.

8. Procédé selon la revendication 7, dans lequel la base de données est mise à jour avec un statut de mode inactif de l'UE (3).

9. Procédé selon la revendication 7, comprenant en outre une étape d'exploitation d'un temporisateur de connexion.

10. Procédé selon la revendication 9, dans lequel le deuxième dispositif de gestion de mobilité (7, 8) est agencé pour envoyer une demande de requête se rapportant à un statut de connexion de l'UE (3) au serveur d'abonnement (10, 11) par rapport au statut du temporisateur de connexion.
